Europäisches Patentamt

European Patent Office

Office européen des brevets

(19)

(11) Veröffentlichungsnummer: **0 008 785**
**A1**

(12) # EUROPÄISCHE PATENTANMELDUNG

(21) Anmeldenummer: **79103239.4**

(22) Anmeldetag: **03.09.79**

(51) Int. Cl.³: **C 01 B 25/14**

(30) Priorität: **04.09.78 DE 2838550**

(43) Veröffentlichungstag der Anmeldung:
**19.03.80 Patentblatt 80/6**

(84) Benannte Vertragsstaaten:
**BE CH DE FR GB IT**

(71) Anmelder: **HOECHST Aktiengesellschaft WERK KNAPSACK D-5030 Hürth(DE)**

(72) Erfinder: **Niermann, Hermann, Dr. Am Wachberg 34 D-5042 Erftstadt(DE)**

(72) Erfinder: **Reichert, Günter Weierstrasse 26 D-5303 Bornheim-Merten(DE)**

(72) Erfinder: **Ebert, Hans, Dr. Von Bodelschwingh Weg 53 D-5042 Erftstadt(DE)**

(72) Erfinder: **Neumann, Friedrich Oststrasse 2c D-4755 Holzwickede(DE)**

(54) **Verfahren und Vorrichtung zur Herstellung von Phosphorpentasulfid geringer Reaktivität.**

(57) Verfahren und Vorrichtung zur Herstellung von Phosphorpentasulfid geringer Reaktivität, indem man eine Phosphorpentasulfidschmelze verfestigt und das feste Produkt vor der Mahlung abkühlt. Dabei bringt man das feste Produkt mit einer Temperatur zwischen 150 und 220°C aus einer Kühlzone (1) in einen wärmeisolierten Behälter (4) und regelt dort die Abführung der immanenten Wärme des Produktes so, daß seine Abkühlung nicht mehr als 30°C/h beträgt.

EP 0 008 785 A1

./...

HOECHST AKTIENGESELLSCHAFT                    HOE 78/H 018


Verfahren und Vorrichtung zur Herstellung
von $P_2S_5$ geringer Reaktivität


Die vorliegende Erfindung betrifft ein Verfahren zur Herstellung von Phosphorpentasulfid geringer Reaktivität, indem man schmelzflüssiges Phosphorpentasulfid ($P_2S_5$) in einer Kühlzone verfestigt und das feste Produkt bei Temperaturen unterhalb des Schmelzpunktes verweilen läßt, bevor man es zur Mahlung auf Temperaturen unterhalb 65°C abkühlt. Außerdem betrifft sie eine Vorrichtung zur Durchführung des erfindungsgemäßen Verfahrens.

Bei der Verarbeitung von Phosphorpentasulfid ($P_2S_5$) spielt die sogenannte "Reaktivität" eine große Rolle. Die bei der Umsetzung des $P_2S_5$ mit einem Alkohol, z.B. Äthylhexanol, freiwerdende Reaktionswärme, gemessen in °C/h, stellt ein Maß für die Reaktivität des $P_2S_5$ dar.

Man unterscheidet hoch- und niedrigreaktive $P_2S_5$-Sorten. Die hochreaktiven Sorten werden durch schnelles Abkühlen der $P_2S_5$-Schmelze unter dem Verfestigungspunkt erhalten, während niedrigreaktive Produkte beim langsamen Erstarren
in größeren Behältern entstehen.

Für verschiedene Prozesse werden nun Reaktivitäten verlangt, die zwischen dem hochreaktiven und dem beim langsamen Erstarren in Behältern erhaltenen niedrigreaktiven
$P_2S_5$ liegen. Hierfür sind bereits verschiedene Verfahren
entwickelt worden:

Gemäß der US-PS 3,146,069 erhitzt man hochreaktives $P_2S_5$
erneut auf Temperaturen zwischen 150 und 265°C und tempert es bei diesen Temperaturen. Dabei sinkt mit steigender Temper-Temperatur die Reaktivität der erhaltenen Produkte. Nach den US-PSen 3,023,086 und 3,282,653 wird das
Phasentransformationsintervall des $P_2S_5$ flüssig-fest im
Bereich zwischen 280°C und 260°C in kontrollierten und
bestimmten Zeiträumen mit Hilfe verschiedener Kühlmittel
oder -zonen durchlaufen. Dabei werden mit länger werdender
Kühlzeit für dieses Intervall entsprechend kleinere Reaktivitäten erhalten.

Schließlich wird gemäß US-PS 3,183,062 eine gewünschte Reaktivität des bereits verfestigten $P_2S_5$ dadurch eingestellt, daß man durch Wärmezufuhr mit Hilfe eines Wärmeaustauschstoffes die Temperatur des $P_2S_5$ über einen ausreichenden Zeitraum auf einer bestimmten Temperatur zwischen 190°C und dem Schmelzpunkt hält.

Allen Verfahren ist der Nachteil gemeinsam, daß man eine
bestimmte Reaktivität des $P_2S_5$ nur durch gezielte Wärmezufuhr zum bereits verfestigten $P_2S_5$ oder durch dosierte
Wärmeabführung beim Verfestigungsvorgang erhält. Alle
die Verfahren benötigen einen großen apparativen Aufwand
zur Steuerung des Prozesses.

Es wurde nun überraschend gefunden, daß man hohe Reaktivitäten, die man beim raschen Abkühlen von $P_2S_5$ in Kühleinrichtungen, wie z.B. auf Kühlwalzen, erhält, vermindern kann, ohne daß dem verfestigten $P_2S_5$ erneut Energie zugeführt werden muß und ohne daß ein großer apparativer Aufwand erforderlich ist.

Im einzelnen besteht die vorliegende Erfindung darin, daß man das in einer Kühlzone aus einer Schmelze rasch verfestigte $P_2S_5$ mit einer Temperatur zwischen 150 und 220°C aus dieser Kühlzone in einen wärmeisolierten Behälter bringt und die Abführung der immanenten Wärme des Produktes durch entsprechende Isolierung des Behälters so regelt, daß die Abkühlung des $P_2S_5$ nicht mehr als 30°C/h beträgt. Anschließend läßt man das Produkt in einem Vorratsbunker, der im thermischen Gleichgewicht mit der Atmosphäre steht, auf Temperaturen unter 65°C abkühlen, damit das Produkt gemahlen und abgefüllt werden kann. Dabei fallen die Endprodukte mit umso geringerer Reaktivität an, je geringer die Abkühlungsgeschwindigkeit in dem wärmeisolierten Behälter ist.

In Anbetracht des Standes der Technik war es für einen Fachmann nicht vorhersehbar, daß noch weit unterhalb des Verfestigungsintervalls des $P_2S_5$ die immanente Wärme des Produktes für den Kristallisationsvorgang ausreichend ist, der letztlich zur Herabsetzung der Reaktivität des $P_2S_5$ führt, so daß keinerlei Energie zugeführt werden muß.

Ein weiterer Gegenstand der vorliegenden Erfindung ist eine Vorrichtung zur Durchführung des erfindungsgemäßen Verfahrens.

Eine solche Vorrichtung ist in der nachfolgenden Zeichnung schematisch dargestellt und besteht aus einer Kühleinrichtung 1 für die $P_2S_5$-Schmelze, wobei diese Kühleinrichtung 1 vorzugsweise in Form einer Kühlwalze mit einer Zuführung 2 für die $P_2S_5$-Schmelze sowie einer Abschabvorrichtung 3 für verfestigtes $P_2S_5$ von der Kühlfläche versehen und mit einem Verweilbehälter 4 verbunden ist, an den über eine Absperrvorrichtung 5 ein Vorratsbunker 6, der im thermischen Gleichgewicht mit der Atmosphäre steht, angeschlossen ist.

Erfindungsgemäß besteht nun der Verweilbehälter 4 aus einem wärmeisolierten Gefäß, das vorzugsweise ein Dewar-Gefäß oder mit Wärmedämmplatten ausgestattet ist.

Der Grad der Wärmeisolierung des Verweilbehälters 4 richtet sich dabei nach der gewünschten Abkühlungsgeschwindigkeit des $P_2S_5$.

Die anschließenden Beispiele sollen zur Charakterisierung des Erfindungsgegenstandes dienen. Dabei wurde die Reaktivität als Steigung der Temperatur-Zeitgeraden gemessen, die sich ergibt, wenn man 50 g $P_2S_5$-Pulver in ein Kalorimeter gibt, in dem sich 100 g Äthylhexanol bei 30°C befinden.

Beispiel 1 (Vergleichsbeispiel)

$P_2S_5$ wurde von einer Kühlwalze bei einer Temperatur von 208°C abgeschuppt, in einem üblichen Abfüllbunker im Verlauf von 2 Stunden auf ca. 80°C abgekühlt und gemahlen. Es besaß anschließend eine Reaktivität von 47°C/h.

## Beispiel 2

$P_2S_5$ wurde von einer Kühlwalze bei einer Temperatur von $207^oC$ abgeschuppt und in einem "Dewar"-Gefäß 2 Stunden lang gehalten; dabei sank die Temperatur im $P_2S_5$ auf $160^oC$. Anschließend wurde es innerhalb einer Stunde auf $50^oC$ abgekühlt und gepulvert. Es besaß dann eine Reaktivität von $12^oC/h$.

## Beispiel 3

$P_2S_5$ wurde bei $207^oC$ von einer Kühlwalze abgeschuppt und in einem thermisch mit Wärmedämmplatten isolierten Gefäß 2 Stunden gehalten; dabei sank die Temperatur im $P_2S_5$ auf $150^oC$. Anschließend wurde es in weiteren 2 Stunden auf $60^oC$ gekühlt und gemahlen. Die Reaktivität betrug $22^oC/h$.

## Beispiel 4

$P_2S_5$ wurde bei $167^oC$ von einer Kühlwalze abgeschuppt und in einem "Dewar"-Gefäß 2 Stunden lang gehalten; dabei sank die Temperatur im $P_2S_5$ auf $110^oC$. Anschließend wurde es auf $50^oC$ abgekühlt und gepulvert. Die Reaktivität betrug $26^oC/h$.

## Beispiel 5

$P_2S_5$ wurde bei $167^oC$ von einer Kühlwalze abgeschuppt und in einem "Dewar"-Gefäß 4 Stunden lang gehalten; dabei sank die Temperatur im $P_2S_5$ auf $85^oC$. Anschließend wurde es innerhalb 1 Stunde auf $50^oC$ abgekühlt und gemahlen. Die Reaktivität betrug $23^oC/h$.

Beispiel 6

$P_2S_5$ wurde bei 205$^o$C von einer Kühlwalze abgeschuppt und in einem "Dewar"-Gefäß 1 Stunde lang gehalten; dabei sank die Temperatur im $P_2S_5$ auf 180$^o$C. Anschließend wurde es in 2 Stunden auf 60$^o$C gekühlt und gemahlen. Die Reaktivität betrug 15$^o$C/h.

HOECHST AKTIENGESELLSCHAFT                    HOE 78/H 018

Verfahren und Vorrichtung zur Herstellung
von $P_2S_5$ geringer Reaktivität

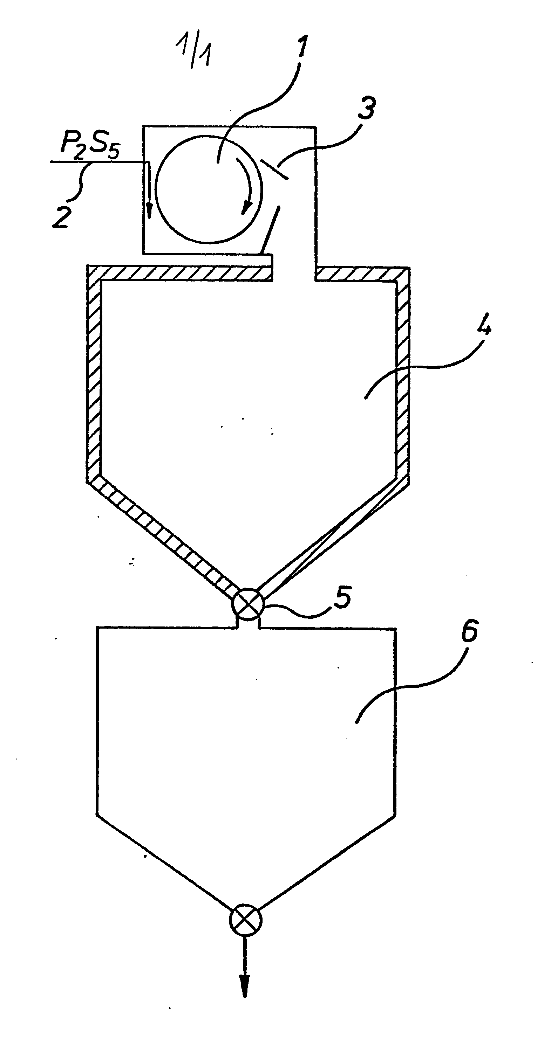

Patentansprüche

1. Verfahren zur Herstellung von Phosphorpentasulfid geringer Reaktivität, indem man schmelzflüssiges Phosphorpentasulfid in einer Kühlzone rasch verfestigt und das feste Produkt bei Temperaturen unterhalb seines Schmelzpunktes verweilen läßt, bevor man es zur Mahlung auf Temperaturen unterhalb 65°C abkühlt, dadurch gekennzeichnet, daß man das feste Produkt mit einer Temperatur zwischen 150 und 220°C aus der Kühlzone in einen wärmeisolierten Behälter bringt und dort die Abführung der immanenten Wärme des Produktes durch entsprechende Isolierung des Behälters so regelt, daß seine Abkühlung nicht mehr als 30°C/h beträgt, wobei das Endprodukt mit umso geringerer Reaktivität anfällt, je geringer die Abkühlungsgeschwindigkeit ist.

2. Vorrichtung zur Herstellung von Phosphorpentasulfid geringer Reaktivität aus einer $P_2S_5$-Schmelze nach einem Verfahren gemäß Anspruch 1, bestehend aus einer Kühleinrichtung (1) für die genannte Schmelze, wobei die Kühleinrichtung (1) mit einer Zuführung (2) für die $P_2S_5$-Schmelze sowie einer Abschabvorrichtung (3) für das verfestigte $P_2S_5$ von der Kühlfläche versehen und mit einem Verweilbehälter (4) verbunden ist, an den über eine Absperrvorrichtung (5) ein Abkühlbehälter (6) angeschlossen ist, dadurch gekennzeichnet, daß der Verweilbehälter (4) aus einem wärmeisolierten Gefäß besteht.

3. Vorrichtung nach Anspruch 2, dadurch gekennzeichnet, daß der Verweilbehälter (4) aus einem Dewar-Gefäß besteht.

4. Vorrichtung nach Anspruch 2, dadurch gekennzeichnet, daß der Verweilbehälter (4) aus einem mit Wärmedämmplatten isolierten Gefäß besteht.

Europäisches Patentamt

**EUROPÄISCHER RECHERCHENBERICHT**

EP 79 103 239.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D,X | US - A- 3 146 069 (S. ROBOTA) <br> * Spalte 1, Zeilen 44 bis 47, Anspruch 3 * <br> -- | 1 |
| | DE - B - 1 171 883 (HOOKER CHEM. CORP.) <br> * Spalte 1 * <br> -- | 1 |
| A | DE - B - 1 222 480 (KNAPSACK) <br> -- | |
| A | FR - A - 1 293 326 (AMERICAN AGRICULTU-RAL CHEM. COMP.) <br> -- | |
| D | US - A - 3 023 086 (S. ROBOTA) <br> -- | |
| D | US - A - 3 183 062 (J.A. TAYLOR) <br> -- | |
| D | US - A - 3 282 653 (S. ROBOTA) <br> ---- | |

**KLASSIFIKATION DER ANMELDUNG (Int.Cl.³)**

C 01 B 25/14

**RECHERCHIERTE SACHGEBIETE (Int. Cl.³)**

B 01 D 9/00
C 01 B 25/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 20-11-1979 | KESTEN |

EPA form 1503.1 06.78